# EUROPEAN PATENT APPLICATION

(11) **EP 3 778 274 A1**
(43) Date of publication of application: **17.02.2021**
(21) Application number: 19774439.4
(22) Date of filing: 06.03.2019
(51) Int. Cl.: B60H 1/34

(54) **DAMPER AND CIRCULAR AIR-CONDITIONING AIR OUTLET**

(30) Priority: 30.03.2018 CN 201810275834
(71) Applicant: Chinatool Mould Systems Co., Ltd., Shenzhen, Guangdong 518101 (CN)
(72) Inventor: TAN, Xialin, Shenzhen, Guangdong 518101 (CN); WU, Wenke, Shenzhen, Guangdong 518101 (CN)
(74) Representative: Robba, Pierpaolo
(86) International application number: PCT/CN2019/077216
(87) International publication number: WO 2019/184673

(57) **Abstract**

The present invention discloses a damper including a base, a rotation part, and a transmission part, wherein the base is provided with an inner cavity and is disposed with openings at both ends, an end of the rotation part is rotatably accommodated in the inner cavity of the base and is adapted to the shape of the inner cavity, an end of the transmission part is rotatably accommodated in the inner cavity of the rotation part, a first friction part is provided between the rotation part and the base, and a second friction part is provided between the transmission part and the rotation part. The present invention further provides a circular air conditioner vent, including a casing, a blade placed in the casing, a gear, a ventilation door, and the damper. The damper adopted in the present invention further simplifies the structure, making the rotation of the damper smooth and stable, and the damper can maintain a damping force that tends to be constant. At the same time, the casing strength of the parts is enhanced in the production of parts, thereby prolonging the service life, and reducing the fine requirements for the size specifications which is in favor of production.

## Description

### Technical Field

The present application relates to the technical field of air conditioner, and in particular to a circular air conditioner vent.

### Background

In the field of automobile air conditioner, the adjustment of the air conditioner vent usually includes the opening and closing adjustment of the blowing volume and the blowing direction adjustment. In the prior art, there has been a technical solution that the blowing volume and blowing direction can be adjusted simultaneously through the blade of the air conditioner vent. However, there are still problems in the prior art that the structure is relatively complicated, the joint rotation is not smooth and stable, and the material used will be less elastic due to wear and aging, thereby affecting the holding force of the joint.

Therefore, the present invention intends to provide a simplified structure, a damper and a circular air conditioner vent whose joints continue to work smoothly, so as to overcome the defects in the prior art.

### Summary

In view of the above problems mentioned in the prior art, the present invention provides a damper and a circular air conditioner vent to solve the above problems.

An embodiment of the present application provides a damper, comprising a base, a rotation part, and a transmission part, wherein the base is provided with an inner cavity and is disposed with openings at both ends, an end of the rotation part is rotatably accommodated in the inner cavity of the base and is adapted to the shape of the inner cavity, the other end of the rotation part passes through the base through an opening at an end of the base, and the end of the rotation part accommodated in the base is disposed with an opening and is provided with an inner cavity; an end of the transmission part is rotatably accommodated in the inner cavity of the rotation part, and the other end of the transmission part passes through the base through an opening at an end distal from the rotation part, and the transmission part is rotatable around an axis under the driving of the rotation part; a first friction part is provided between the base and the rotation part and is sleeved on an end of the rotation part connected to the base, and the shape of the first friction part is adapted to the shape of the end of the rotation part connected to the base; and a second friction part is provided between the rotation part and the transmission part and is sleeved on an end of the transmission part connected to the rotation part, and the shape of the second friction part is adapted to the shape of the end of the transmission part connected to the rotation part.

Preferably, the first friction part comprises a first friction part body and a first extension part; the end of the rotation part connected to the base is provided with a through hole matching with the first extension part; the first friction part body is disposed on an outer surface of the end of the rotation part connected to the base; and the first extension part extends to the inner cavity of the rotation part through the through hole set in the rotation part.

Preferably, the second friction part comprises a second friction part body and a second extension part; the end of the transmission part connected to the rotation part, is provided with a through hole matching with the second extension part of the friction part; the second friction part body is disposed on an outer surface of the end of the transmission part connected to the rotation part; and the second extension part passes through the through hole set in the transmission part.

Preferably, the rotation part comprises a first sphere and a first operating shaft with an end connected to the first sphere; the first sphere is rotatably accommodated in the inner cavity of the base; the first operating shaft passes through the base through an opening at an end of the base; the first sphere is disposed with an opening and has an inner cavity; the transmission part comprises a second sphere, a second operating shaft with an end connected to the second sphere, and a force applying part; the second sphere is rotatably accommodated in the inner cavity of the first sphere; the second operating shaft passes through an opening at one end of the base distal from the rotation part; and the force applying part presses the transmission part toward the rotation part.

Preferably, a limiting part is disposed on the second operating shaft and is a non-circular annular protrusion perpendicular to an axis direction of the transmission part; and the side of the limiting part away from the rotation part abuts against an end of the force applying part.

Preferably, an error-proofing structure is also disposed on the limiting part, and the error-proofing structure is a protruding block, and the protruding block extends from a plane of the annular protrusion of the limiting part to its vertical direction or other non-parallel directions.

Preferably, the first operating shaft is made of plastic material with more than two polygonal grooves thereon; the second operating shaft is made of plastic material; more than two polygonal grooves are provided on the second operating shaft between the second sphere and the limiting part; and a portion of the second operating shaft located on the distal side of the limiting part away from the second sphere is provided with several cross-disposed reinforcing rip-shaped stiffeners which arranged in horizontal and vertical direction respectively.

Preferably, the base is an integral structure.

An embodiment of the present application provides a circular air conditioner vent comprising a casing, a blade placed in the casing, a gear, a ventilation door, and the damper, wherein the base of the damper is fixedly connected to an inner surface of the casing, the blade is circular and is fixedly connected with the rotation part of the damper, the ventilation door is rotatably connected in the casing and is connected to the damper through the gear, and the damper drives the ventilation door to rotate.

Preferably, an edge of the ventilation door is provided with one or more supporting rip-shaped stiffeners.

It can be seen from the above technical solutions that the damper adopted in the present invention can realize the unified functions of the opening and closing adjustment of the blowing volume and the blowing direction adjustment of the circular air conditioner vent, and the device structure is simple, the operation space is saved, and the operation is simple. The damper of the present invention provides the first friction parts and the second friction parts making the rotation of the damper smooth and stable, so that the damper can maintain a constant damping force, and in the production of parts and components, the fine requirements for size specifications are also reduced, and in terms of usability, it is beneficial to avoid the problem that the damper cannot maintain the damping force due to material wear and aging. In addition, the setting of the rotation positioning structure and the error-proofing structure on the transmission part facilitates the smooth assembly of the damper in the casing, and at the same time simplifies the structure of the traditional blade; setting the rotation positioning function on the transmission part is more conducive to protecting the blade, thereby achieving effective rotation limit. Meanwhile, the structural improvement of the first operating shaft and the second operating shaft has enhanced the casing strength of the first operating shaft and the second operating shaft, and it also reduces the probability of shaft deformation while saving raw materials, which is beneficial to improve the service life of the damper.

### Brief Description of the Drawings

In order to explain the embodiments of the present invention or the technical solutions in the prior art more clearly, the following will briefly introduce the drawings that need to be used in the description of the embodiments or the prior art. Obviously, the drawings in the following description are only some embodiments of the present invention. For those of ordinary skill in the art, other drawings can be obtained based on these drawings without creative work.
FIG. 1 is a structure exploded view of the damper of the present invention;
FIG. 2 is an exploded view of the circular air conditioner vent of the present invention;
FIG. 3 is a cross-sectional view of the circular air conditioner vent of the present invention in a direction perpendicular to an axis of an ear column of the transmission part (direction A-A);
FIG. 4 is a cross-sectional view of the circular air conditioner vent of the present invention in a direction along an axis of an ear column of the transmission part (direction B-B).

### Detail Description of the Embodiments

The technical solutions in the embodiments of the present invention will be clearly and completely described below in conjunction with the accompanying drawings in the embodiments of the present invention. Obviously, the described embodiments are only a part of the embodiments of the present invention, rather than all the embodiments. Based on the embodiments of the present invention, all other embodiments obtained by those of ordinary skill in the art without creative work shall fall within the protection scope of the present invention.

### Embodiment 1:

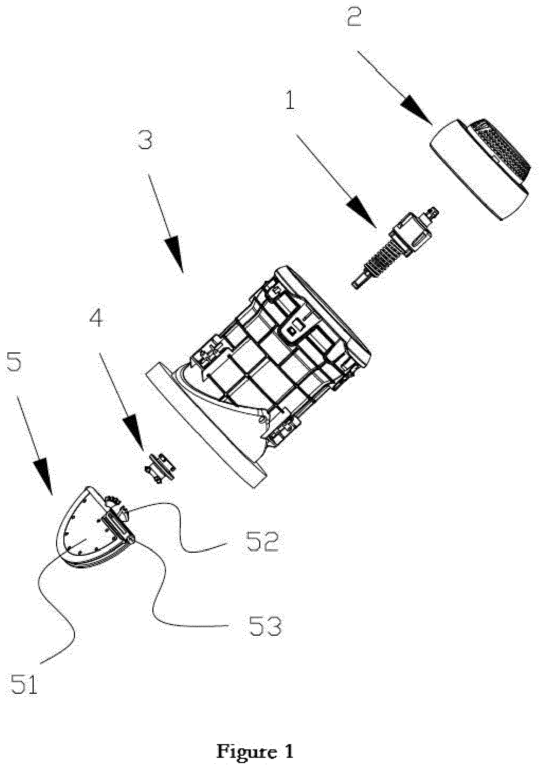

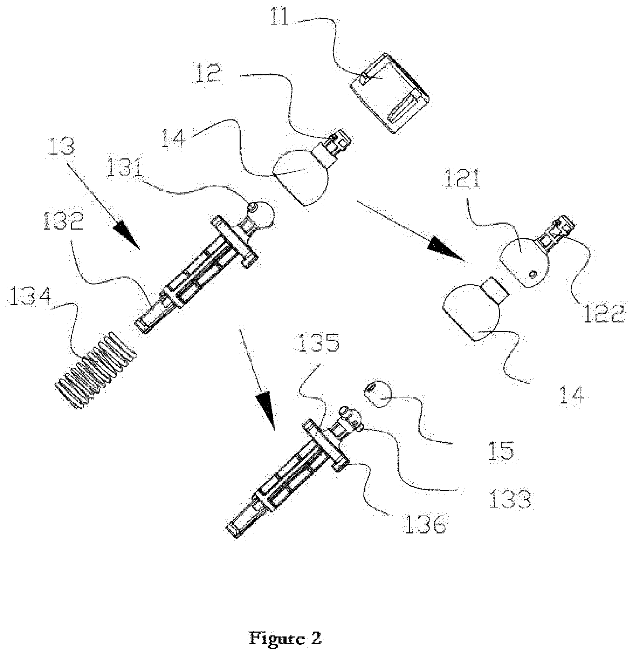

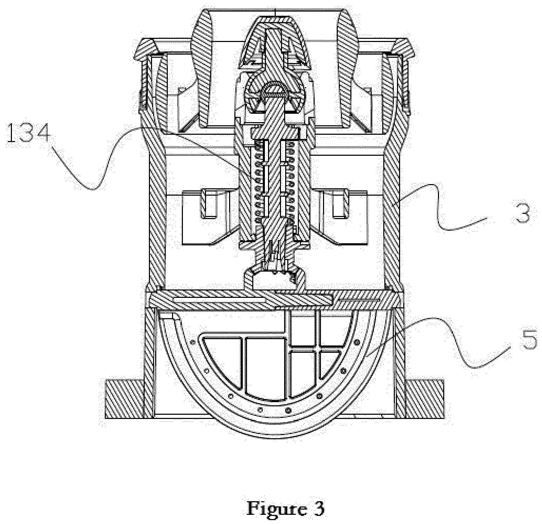

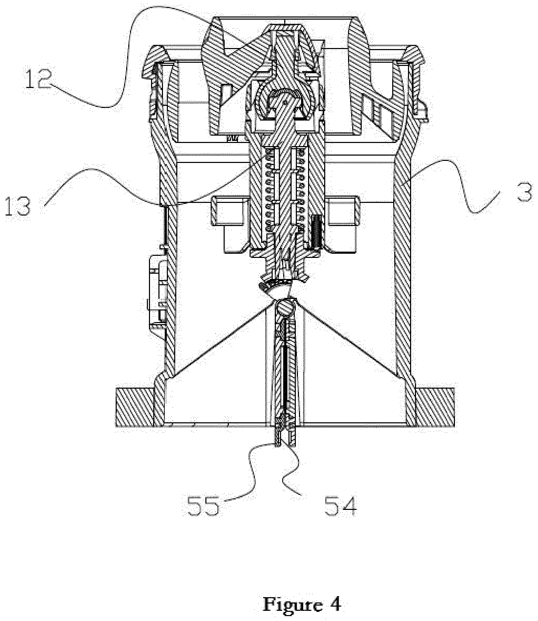

An embodiment of the present application provides a damper 1, as shown in FIGS. 1-4, comprising a base 11, a rotation part 12, and a transmission part 13. The base 11 is provided with a spherical inner cavity and is disposed with openings at both ends. An end of the rotation part 12 is rotatably accommodated in the inner cavity of the base 11 and is adapted to the shape of the inner cavity, and the other end of the rotation part passes through the base 11 through an opening at an end of the base 11, and the end of the rotation part 12 accommodated in the base 11 is disposed with an opening and is provided with an inner cavity. An end of the transmission part 13 is rotatably accommodated in the inner cavity of the rotation part 12 and is adapted to the shape of the inner cavity, and the other end of the transmission part passes through an opening at an end of the base 11 distal from the rotation part 12, and the transmission part is rotatable around an axis under the driving of the rotation part.

The base 11 of this embodiment is an integral structure with a spherical inner cavity and disposed with openings at both ends.

The rotation part 12 comprises a first sphere 121 and a first operating shaft 122 with an end connected to the first sphere 121; the first sphere 121 is rotatably accommodated in the inner cavity of the base 11; the first operating shaft 122 passes through an opening at an end of the base 11; the first sphere 121 is disposed with an opening and has an inner cavity; the first operating shaft 122 can drive the first sphere 121 to rotate around the center point of the first sphere 121 in the inner cavity of the base 11 or around the axis of the first operating shaft 122.

The transmission part 13 comprises a second sphere 131, a second operating shaft 132 with an end connected to the second sphere 131, and a force applying part 134; the second sphere 131 is rotatably accommodated in the inner cavity of the rotation part 12; the second operating shaft 132 passes through the base 11 by an opening disposed at the distal end of the base awayfrom the rotation part 12; and the force applying part 134 presses the transmission part 13 toward the rotation part 12, such that the second sphere 131 is squeezed in the direction toward the first sphere 121 to maintain a constant force between the transmission part and the rotation part. The force applying part 134 is an elastic member with elasticity. In this embodiment, the force applying part 134 is a spring.

A first friction part 14 is provided between the base 11 and the rotation part 12 and the first friction part 14 is disposed on the rotation part 12. The first friction part 14 is sleeved on an end of the rotation part 12 connected to the base 11;the shape of the first friction part 14 is adapted to the shape of the end of the rotation part 12 and the end is connected to the base 11. In this embodiment, the first friction part 14 is sleeved on the first sphere 121 of the rotating shaft and its connected site with the first operating shaft 122. The first friction part 14 is located between the first sphere 121 and one end of the first operating shaft 122 and the base 11. The first friction part 14 rotates with one end of the rotation part 12 in the inner cavity of the base, avoiding direct contact between the rotation part and the base when rotating, reducing the bumps. In order to make the rotation part 12 and the first friction part 14 fit more closely, the first friction part 14 includes a first friction part body and a first extension part, and the first sphere 121 of the rotation part 12 is provided with at least one through hole, and the through hole is matched with the first extension part of the first friction part. The first friction part body is disposed on the outer surface of the first sphere 121 of the rotation part and its connected site with the first operating shaft 122. The first extension part extends to the inner cavity surface of the first sphere 121 through the through hole set in the rotation part 12. The first sphere of this embodiment is provided with a through hole at both ends on the same horizontal axis, and the force between the first friction part and the first sphere is relatively uniform and balanced. It is beneficial to maintain a constant damping force when the rotation part rotates relative to the base.

A second friction part 15 is provided between the rotation part 12 and the transmission part 13 and the second friction part 15 is disposed on the transmission part 13. The second friction part 15 is sleeved on an end of the transmission part 13 connected to the rotation part 12, that is, the second friction part 15 is sleeved on an end of the transmission part 13 connected with the rotation part 12. And the shape of the second friction part 15 is adapted to the shape of the end of the transmission part 13 connected to the rotation part 12. In this embodiment, the second friction part 15 is sleeved on the second sphere 131, and the second friction part 15 is located between the second sphere 131 and the inner cavity of the first sphere 121. The second friction part 15 rotates around the axis in the inner cavity of the first sphere 121 with the second sphere 131. In order to make the transmission part and the second friction part fit more closely, the second friction part includes a second friction part body and a second extension part, the second sphere 131 of the transmission part is provided with at least one through hole that matches with the second extension part of the second friction part; the second friction part body is disposed on the outer surface of the second sphere of the transmission part, and the second extension part passes through the through hole set in the transmission part. Since the first extension part of the first friction part 14 extends to the surface of the inner cavity of the first sphere, the first extension part and the second friction part are in contact at this time, thereby further increasing the damping force between the rotation part 12 and the transmission part 13.

The first friction part 14 and the second friction part 15 can be made of material with damping friction force. Both the first friction part 14 and the second friction part 15 of the present application are made of soft rubber material. Compared with resin material, soft rubber material has outstanding advantages in terms of resistance to friction and aging, which are beneficial to maintain the force between the rotation part 12 and the transmission part 13 and prolong the service life of the product. In addition, the soft rubber material has a relatively soft texture, which has lower requirements for dimensional errors during producing and processing, which is conducive to mass and rapid production, and also reduces the precision requirements for dimensions of other parts that cooperate with it during producing and processing. When the damper 1 is working, it mainly relies on the friction damping force between the first friction part 14 and the inner cavity of the base 11, and the friction damping force between the second friction part 15 and the inner cavity of the rotation part 12 to realize the holding force of the damper 1 on the working action. The soft rubber materials of the first friction part 14 and the second friction part 15 help the damper to maintain a constant damping force to a certain extent, so that the operation of the damper 1 is smooth and stable. In order to further strengthen the constant damping force of the damper, a grease layer is provided between the first friction part 14 and the inner cavity of the base 11, and between the second friction part 15 and the inner cavity of the rotation part 12. The grease used in the grease layer is not only a lubricating material, but also a commonly used damping material. It can use its own lubricity and viscosity to generate a smooth and constant damping force between two relatively moving parts. When working, different parts rotate relatively, and the grease layer will form a thin oil film in the gap between the different parts. The oil film plays a role of lubrication during the rotation of the parts, so that the parts rotate smoothly. Coupled with the viscosity of the grease itself, it can make the parts produce a constant friction when the parts are rotating, forming a constant damping. By adopting this structure, smooth and constant damping is formed between the parts that are rotatably matched with each other, and the structure is simple and is convenient to assembly. The grease layer plays a role of lubricating during the rotation of the rotation part 12 and the base 11, and the rotation and matching of the transmission part 13 and the rotation part 12, so that the rotation is smooth, and combined with the viscosity of the grease itself, a constant friction force may be generated during the rotating motion of the rotation part 12 and the base 11, so that a constant friction force is generated during the rotating motion of the transmission part 13 and the rotation part 12, forming a constant damping, such that the damper forms a smooth and constant damping when working.

When realizing the rotation of the transmission part around the axis, the technical solution adopted in this embodiment is to provide an ear column 133 on the second sphere 131. The ear column 133 in this embodiment is a columnar protrusion arranged on the surface of the second sphere 131. The inner cavity of the first sphere 121 is provided with an ear column avoiding groove that cooperates with the ear column 133, and the ear column 133 is used for realizing that the rotation part 12 drives the transmission part 13 to rotate synchronously around the axis. The ear column 133 is a columnar protrusion distributed in the direction of a non-rotating axis of the second sphere 131. The rotation part 12 can drive the transmission part 13 to rotate synchronously around the axis through the cooperation of the ear column 133 and the ear column avoiding groove. In order to achieve a better effect, a plurality of ear columns 133 can be arranged, and are respectively provided on two or more sides in the axial direction. The ear columns 133 of this embodiment are two columnar protrusions arranged on the same horizontal surface of the second sphere 131 in the facing direction, and an ear column axis of the two ear columns 133 is perpendicular to an axis of the transmission part, and a line connecting the axes passes through the center point of the second sphere 131. At this time, the body of the second friction part 15 may completely cover the outer surface of the second sphere, or only cover the part except the ear columns.

A limiting part 135 is disposed on the second operating shaft 132 of the transmission part 13 and the limiting part 135 is a non-circular annular protrusion perpendicular to an axis direction of the transmission part. In the present application, the side of the limiting part 135 distal from the rotation part abuts against an end of the force applying part 134. When assembling the damper to the air conditioner vent, the limiting part 135 cooperates with other external components. The limiting part 135 is provided with a rotation positioning structure for limiting the rotation angle of the transmission part 13. The rotation positioning structure is a protrusion extending outward along the plane of the limiting part, and the protrusion is placed in a specific elongated groove of an external components when the damper is assembled to the air conditioner vent. The rotation positioning structure is limited to reciprocating movement in the specific groove when the transmission part rotates around the axis, thereby limiting the rotation angle of the transmission part.

An error-proofing structure 136 is also disposed on the limiting part 135, for determining the installation position of the transmission part 13 when it is matched with external components The error-proofing structure 136 is specifically a protruding block extending from a plane of the annular protrusion of the limiting part 135 to its vertical direction or other non-parallel directions. That is, the extension direction of the protruding block is the axis direction parallel to the transmission part 13 or other non-vertical directions, to place the protruding block in a specific deepened groove when it is matched with external parts. The reciprocating movement angle of the error-proofing structure in the deepened groove is same as the rotation positioning structure. In this embodiment, the arrangement direction of the protruding block is parallel to the axis direction of the transmission part, which reduces the width of the deepened groove of external parts and facilitates processing and producing.

Taking into account the convenience of production and the durability of use, the rotation part 12 and the transmission part 13 of this embodiment are made of plastic material. Of course, other material can be used in other embodiments. Nowadays, parts made of plastic material are easy to shrink and the product size is not easy to control. For this reason, in this embodiment, two or more rubber reducing grooves are respectively provided on the rotation part and the transmission part, especially in the cylindrical part of the first operating shaft 122 and the second operating shaft 132. Specifically, two or more square grooves are provided on the first operating shaft 122, and two or more square grooves are provided between the limiting part 135 of the second operating shaft 132 and the second sphere 131. The above-mentioned grooves can be evenly arranged, thus it is helpful to avoid shrinkage, reduce deformation, and affect the size of parts. Of course, in other embodiments, the shape of the grooves may be a circle, a triangle, or other polygons.

A portion, located on the side of the limiting part distal from the second sphere, of the second operating shaft 132 is provided with several cross-disposedreinforcing rip-shaped stiffeners arranged horizontally and vertically, thereby increasing the casing strength of the second operating shaft.

### Embodiment 2:

This embodiment provides a circular air conditioner vent, comprising a casing 3, a blade 2 placed in the casing 3, a gear 4, a ventilation door 5, and the damper 1 as shown in above embodiment 1, wherein the base 11 of the damper 1 is fixedly connected to an inner surface of the casing 3;the blade 2 is circular and is rigidly connected with the first operating shaft 122 of the rotation part 12 of the damper 1. The first operating shaft 122 can be driven to move by controlling the direction of the blade 2, so as to control the rotation part 12 to rotate around the axis or to rotate in multiple directions around the center of the sphere.

The ventilation door 5 is rotatably connected in the casing 3 and is rotatably moved by the damper 1. The ventilation door 5 includes a rotating shaft 53 connected to the casing 3, a ventilation door body 51 rotatably connected to the rotating shaft 53, and a half bevel gear 52 provided on the ventilation door body 51. The ventilation door body 51 can rotate around the rotating shaft 53 to realize the opening and closing of the ventilation door 5. When the ventilation door 5 is closed, the ventilation door 5 can effectively shield the end of the casing 3 distal from the blade 2, thereby preventing gas from entering the interior of the casing 3. When the blowing volume needs to be adjusted, it is to adjust the opening angle of the ventilation door 5, so as to realize the control and adjustment of the blowing volume.

The transmission part 13 of this embodiment is engaged with the gear 4, and the transmission part 13 drives the gear 4 to rotate around the axis. The force applying part 134 is sleeved on the second operating shaft 132 of the transmission part 13; one end of the force applying part 134 abuts against the limiting part 135 of the transmission part 13, and the other end of the force applying part 134 abuts against the gear 4; the transmission part 13 can move a certain distance relative to the gear 4 in the axial direction according to the force applying condition of the force applying part 134, and the force of the force applying part 134 presses the transmission part 13 toward the rotation part 12, thereby realizing a constant friction between the transmission part 13 and the rotation part 12, and the rotation part 12 and the base 11. The gear 4 meshes with the half bevel gear 52 provided on the ventilation door 5, and the rotation of the transmission part 13 around the axis drives the gear 4 to rotate, thereby driving the ventilation door 5 to rotate around the rotating shaft 53.

The ventilation door 5 of this embodiment includes a rotating shaft 53 and two ventilation door bodies 51 both of which are arranged on the rotating shaft 53. The expanded shape of the two ventilation door bodies 51 is adapted to the opening of one end of the casing 3 distal from the blade 2. The two ventilation door bodies 51 are provided with half bevel gears 52 oppositely and staggered arranged at corresponding positions of the rotating shaft 53 respectively. Specifically, the casing 3 of this embodiment is a cylinder with openings places at two ends, and the ventilation door 5 includes two semi-circular ventilation door bodies 51 coaxially arranged with the same rotating shaft 53, and each ventilation door body 51 is provided with a half bevel gear 52. The half bevel gears 52 on the two ventilation door bodies 51 are arranged oppositely and staggered, and the expanded shape of the two half-circular ventilation door bodies 51 corresponds to the round shape of the end of the casing 3 distal from the blade 2. The gear 4 meshes with the half bevel gears 52 on the two ventilation door bodies 51 simultaneously, thereby driving the two ventilation door bodies 51 to rotate around the rotating shaft 53 simultaneously. Since the half bevel gears 52 are arranged oppositely, the two ventilation door bodies 51 are driven by the gear 4 to rotate around the axis in opposite directions.

In this embodiment, in order to further enhance the overall stability of the ventilation door 5 during the rotation process, one ore more supporting rip-shaped stiffeners 54 are also provided on the circular edge of the ventilation door in this embodiment. Generally, in the prior art, the ventilation door is only provided with a rip-shaped stiffener on the ventilation door body, and the edge of the ventilation door is only made of soft rubber or other material, which causes the ventilation door to shake and be unstable when it rotates to the edge position, leading to the noise problem, and is hard for close contact between the edge of the ventilation door and the casing. One or more supporting rip-shaped stiffeners 54 provided on the edge of the ventilation door 5 in this embodiment can further support the soft rubber on the edge of the ventilation door or other materials 55 that are in direct contact with the casing, so that the whole ventilation door can maintain smooth movement, reduce noise, and reduce the gap between the ventilation door and the casing. In addition, the durability of the damper is also structurally enhanced and avoid the deformation. In this embodiment, the supporting rip-shaped stiffener 54 and the soft rubber material 55 of the circular edge of the ventilation door are closely connected, and the supporting rip-shaped stiffener is located on the side distal from the rotating shaft of the ventilation door when the ventilation door rotates.

When the ventilation door needs to be opened or closed, or the amount of air blowing needs to be adjusted, the blade 2 is controlled to rotate around the axis, thereby driving the rotation part 12 to rotate around the axis relative to the base 11, and in turn drives the transmission part 13 to rotate around the axis through the cooperation of the ear column 133 and the ear column avoiding groove 13, so that the gear 4 rotates around the axis under the driving of the transmission part 13 and meshes with the half bevel gear 52 on the ventilation door 5, so as to realize the rotation of the ventilation door body 51 around the rotation axis 53, that is, to realize the opening or closing operation of the ventilation door 5, or the adjustment of the blowing volume.

When the blowing direction needs to be adjusted, since the rotation part 12 can rotate around the center of the sphere in multiple directions, the adjustment of the blowing direction can be achieved only by adjusting the direction that the blade 2 rotates relative to the sphere center.

The above description are the detailed introductions to the damper and the circular air conditioner vent provided by the embodiments of the present invention. Specific examples are used herein to explain the principle and implementation of the present invention. The descriptions of the above embodiments are only for helping to understand the core idea of the present invention; at the same time, for those of ordinary skill in the art, according to the ideas and methods of the present invention, there will be changes in the specific implementation and the scope of application. In summary, the content of this specification should not be construed as limiting the present invention.

## Claims

1. A damper, comprising a base, a rotation part, and a transmission part, wherein
the base is provided with an inner cavity and is disposed with openings at both ends,
an end of the rotation part is rotatably accommodated in the inner cavity of the base and is adapted to the shape of the inner cavity, and the other end of the rotation part passes through the base through an opening at an end of the base, and the end of the rotation part accommodated in the base is disposed with an opening and provided with an inner cavity;
an end of the transmission part is rotatably accommodated in the inner cavity of the rotation part, and the other end of the transmission part passes through the base through an opening at an end distal from the rotation part, and the transmission part is rotatable around an axis under the driving of the rotation part,
a first friction part is provided between the base and the rotation part and the first friction part is sleeved on an end of the rotation part connected to the base, and the shape of the first friction part is adapted to the shape of the end of the rotation part connected to the base, and
a second friction part is provided between the rotation part and the transmission part and the second friction part is sleeved on an end of the transmission part connected to the rotation part, and the shape of the second friction part is adapted to the shape of the end of the transmission part connected to the rotation part.

2. The damper according to claim 1, wherein the first friction part comprises a first friction part body and a first extension part; the end of the rotation part connected to the base is provided with a through hole matching with the first extension part; the first friction part body is sleeved on an outer surface of the end of the rotation part connected to the base; and the first extension part extends to the inner cavity of the rotation part through the through hole set in the rotation part.

3. The damper according to claim 1, wherein the second friction part comprises a second friction part body and a second extension part; the end of the transmission part connected to the rotation part is provided with a through hole matching with the second extension part of the friction part; the second friction part body is sleeved on an outer surface of the end of the transmission part connected to the rotation part; and the second extension part passes through the through hole set in the transmission part.

4. The damper according to claim 1, wherein the rotation part comprises a first sphere and a first operating shaft with an end connected to the first sphere; the first sphere is rotatably accommodated in the inner cavity of the base; the first operating shaft passes through an opening at an end of the base; the first sphere is disposed with an opening and is provided with an inner cavity; the transmission part comprises a second sphere, a second operating shaft with an end connected to the second sphere, and a force applying part; the second sphere is rotatably accommodated in the inner cavity of the first sphere; the second operating shaft passes through the base through an opening at one end distal from the rotation part; and the force applying part presses the transmission part toward the rotation part.

5. The damper according to claim 4, wherein a limiting part is disposed on the second operating shaft and is a non-circular annular protrusion perpendicular to an axis direction of the transmission part; and the side of the limiting part distal from the rotation part abuts against an end of the force applying part.

6. The damper according to claim 5, wherein an error-proofing structure is also disposed on the limiting part, and the error-proofing structure is a protruding block, and the protruding block extends from a plane of the annular protrusion of the limiting part to its vertical direction or other non-parallel directions.

7. The damper according to claim 4, wherein the first operating shaft is made of plastic material with more than two polygonal grooves thereon; the second operating shaft is made of plastic material; more than two polygonal grooves are provided on the second operating shaft between the second sphere and the limiting part; and a portion of the second operating shaft located on the distal side of the limiting part away from the second sphere is provided with several cross-disposed reinforcing rip-shaped stiffeners which arranged in horizontal and vertical direction respectively.

8. The damper according to claim 1, wherein the base is an integral structure.

9. A circular air conditioner vent, comprising a casing, a blade placed in the casing, a gear, a ventilation door, and the damper as defined any one of claims 1 to 8, wherein the base of the damper is fixedly connected to an inner surface of the casing, the blade is circular and is fixedly connected with the rotation part of the damper, the ventilation door is rotatably connected in the casing and connected to the damper through the gear, and the damper drives the ventilation door to rotate.

10. The circular air conditioner vent according to claim 9, wherein an edge of the ventilation door is provided with one or more supporting rip-shaped stiffeners.
